# EUROPÄISCHE PATENTSCHRIFT

(11) **EP 2 326 455 B1**
(45) Veröffentlichungstag und Bekanntmachung des Hinweises auf die Patenterteilung: **25.04.2012**
(21) Anmeldenummer: 09777779.1
(22) Anmeldetag: 10.08.2009
(51) Int. Cl.: B23K 26/06, B23K 26/24

(54) **VERFAHREN ZUR HERSTELLUNG EINER VERZUGSARMEN SCHWEISSVERBINDUNG**
PROCESS FOR PRODUCING A LOW-DISTORTION WELDED JOIN
PROCÉDÉ POUR RÉALISER UNE LIAISON SOUDÉE À FAIBLE DÉFORMATION

(30) Priorität: 13.08.2008 DE 102008038929
(43) Veröffentlichungstag der Anmeldung: 01.06.2011
(73) Patentinhaber: Koki Technik Transmission Systems GmbH, 09399 Niederwürschnitz (DE)
(72) Erfinder: SCHULZE, Bernd, 09366 Niederdorf (DE)
(74) Vertreter: Arat, Dogan
(86) Internationale Anmeldenummer: PCT/EP2009/005787
(87) Internationale Veröffentlichungsnummer: WO 2010/017942

(56) Entgegenhaltungen:
- EP-A- 1 640 111
- DE-B3- 10 248 955
- DE-C1- 19 639 667
- JP-A- 61 229 489

## Beschreibung

Die Erfindung betrifft ein Verfahren nach dem Oberbegriff des Anspruchs 1.

### Stand der Technik

Schweissen ist bekanntlich ein Fügeverfahren zur stoffschlüssigen Verbindung zweier oder mehrerer Werkstoffe, das vor allem auf der Anwendung von Wärme beruht. Dabei kann das Schweissen mit oder ohne Zusatzwerkstoffe erfolgen.

In diesem Zusammenhang wird unter anderem auf die EP 1 640 111 A2 hingewiesen. Dort ist eine Laserschweisstechnik aus der Luftfahrt offenbart. Weiter wird ausserdem auf die DE 196 39 667 C1 hingewiesen, welche ein Verfahren zum Schweissen beschreibt, unter anderem ein Spannsystem, welches dazu dient, entsprechende Teile während des Schweissvorgangs zu fixieren. Daneben beschreibt auch die DE 102 48 955 B3 sog. Andrückvorrichtungen, welche zu schweissende Bleche fixieren soll.

Ganz generell können sich jedoch bei einem derartigen thermischen Fügen von insbesondere metallischen Bauteilen, diese dabei verziehen, was insbesondere das Einhalten von vorgegebenen Baumassen und von Toleranzen erschweren kann.

Hierbei können das Ausmass der Verzüge von mehreren Faktoren abhängig sein, wie vom Grad des Wärmeeintrags und der Freisetzungsmöglichkeit von in den Bauteilen innewohnenden Eigenspannungen, sowie der jeweiligen Bauteileinspannung in den Schweissvorrichtungen und/oder dem Schweissverlauf.

### Aufgabe der Erfindung

Hier setzt die Erfindung ein, der die Aufgabe zugrunde liegt, ein einfaches Verfahren zum Verbinden von insbesondere metallischen Bauteilen durch Schweissen aufzuzeigen, mit dem ein möglicher Verzug beim Schweissvorgang minimiert werden kann.

### Lösung der Aufgabe

Zur Lösung der Aufgabe führt der kennzeichnende Teil des Anspruchs 1.

Durch ein derartiges zeitgleiches Schweissen an mindestens zwei örtlich voneinander beabstandeten Fügestellen, können z.B. mögliche Eigenspannungen der Bauteile praktisch "eingefroren" und damit praktisch unschädlich gemacht werden. Auch beim anschliessenden Schweissvorgang selbst möglicherweise entstehende Verzüge können dadurch vorteilhaft minimiert werden. Mögliche Eigenspannungen in zu verschweissenden Bauteilen können zwar auch dadurch reduziert werden, indem diese vor dem Schweissen spannungsfrei geglüht werden, was aber einen nicht unwesentlichen weiteren Fertigungsschritt bedeuten würde, der mit zusätzlichen Kosten verbunden wäre.

Bei einem zeitgleichen Schweissen von mindestens zwei örtlich unterschiedlichen Fügestellen hat es sich besonders bewährt, dass das Verschweissen an gegenüberliegenden Fügestellen parallel durchgeführt wird, d.h. beidseitig von mindestens zwei zu verbindenden Bauteilen zu gleicher Zeit eine Schweissverbindung vorgesehen wird.

Ferner kann es von Vorteil sein, wenn die zu verschweissenden Bauteile nach ihrem Zusammenfügen zumindest während des Schweissvorgangs und zumindest in ihrem Fügebereich durch den Druck einer Anpresskraft in ihren Lagen gehalten werden. Es kann aber auch zweckmässig sein, dass die zu verschweissenden Bauteile nach dem Zusammenfügen jedes für sich in seiner Lage gehalten wird.

Insbesondere bei technisch hochwertigen Bauteilen und bei relativ hohen Stückzahlen, wie bei Schaltelementen von Schaltgetrieben, kann es betriebswirtschaftlich günstig sein, die zeitgleichen Schweissvorgänge mittels eines Laserschweissverfahrens durchzuführen. Es wären aber auch Metall-Schutz-Gas Schweissverfahren, so genannte MSG-Schweissverfahren bzw. auch Laser- und/oder MSG-Tandem-Schweissverfahren denkbar.

Die zeitgleichen Schweissvorgänge können zweckmässigerweise mit Hilfe von parallel sich bewegenden Roboterarmen ausgeführt werden, wobei hier eine Kollisionbetrachtung für deren Schweissköpfe ebenfalls zweckmässig ist, damit diese nicht mit einem Vorrichtungsaufbau für das Fixieren der zusammen zu schweissenden Bauteile kollidieren können.

Schliesslich kann die zeitlich an beiden Fügestellen zu erzeugende Schweissverbindung jeweils durch eine Schweissnaht oder durch mehrere Schweisspunkte erfolgen, wobei Letztere zusätzlich noch eine Einsparung beim Schweissaufwand, wie Energie, und gegebenenfalls an Zusatzstoffen bringen können.

In der Praxis hat sich herausgestellt, dass dieses Verfahren die besten Ergebnisse im Bereich der sog. Strahlschweissverfahren erzielt. Weniger gute Ergebnisse werden beim sog. Metall-Inertgas-Schweissverfahren erzielt, da bei diesem Schweissverfahren zu viel Energie in die Bauteile eingebracht wird.

Die Fügestellen dienen nur der Vorfixierung der Bauteile vor dem eigentlichen Durchschweissen, befinden sich aber innerhalb der später folgenden Schweissnaht.

In welcher Form das anschliessende Durchschweissen stattfindet, ist im Einzelnen nicht wichtig für den Erfindungsgedanken. Denkbar ist ein Durchschweissen von einer Fügestelle zur anderen oder ein Beginn zwischen den Fügestellen hin zur nächsten Fügestellen.

Ebenso ist nicht von Belang an welcher Seite der Fügestellen angesetzt wird mit dem Durchschweissen. Ein zeitgleiches Schweissen führt in diesem Zusammenhang zu einer besseren Auslastung der Schweissmaschine und damit zu einer Zeitersparnis. Allerdings ist es auch vom Erfindungsgedanken mitumfasst, dass zunächst die eine Seite des zu bearbeitenden Stückes von Fügestelle zu Fügestelle und anschliessend dann auf der anderen Seite in entgegen gesetzter oder gleicher Richtung von Fügestelle zu Fügestelle geschweisst werden kann.

### Figurenbeschreibung

Weitere Merkmale und Vorteile der vorliegenden Erfindung ergeben sich aus der nachfolgenden Beschreibung und zwei Ausführungsbeispielen in Verbindung mit der Zeichnung; es zeigen:
- Fig. 1: eine perspektivische Darstellung einer beidseitigen Schweissverbindung mittels je einer Schweissnaht zwischen einer Schaltgabel eines Schaltgetriebes und einem Teilstück eines Gabelmitnehmers und
- Fig. 2: eine perspektivische, vereinfachte Darstellung einer Schweissvorrichtung für die Herstellung der Schweissverbindung nach Fig. 1, jedoch sind hier statt jeweils einer beidseitigen Schweissnaht beidseitig eine Reihe von Schweisspunkten vorgesehen.

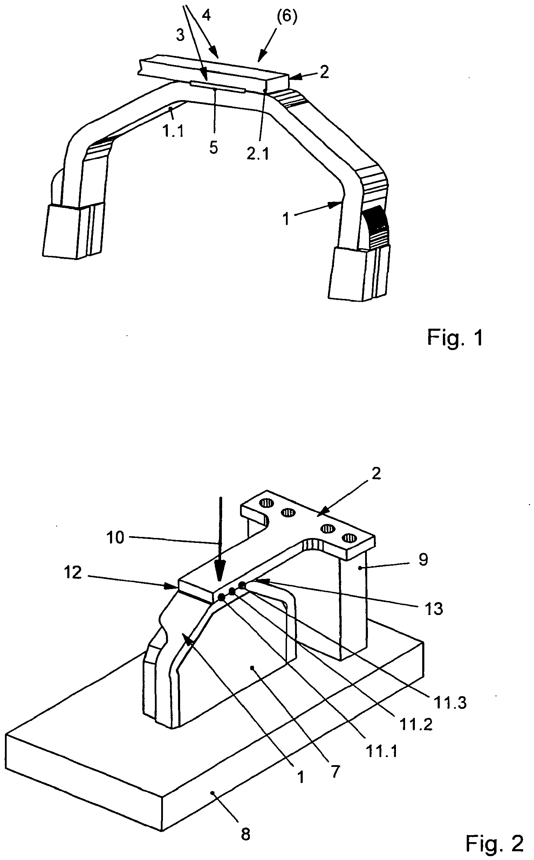

Die in Fig. 1 dargestellten zwei Bauteile - bezeichnet mit 1 und 2 - gehören zu einem Schaltgetriebe, wobei als Bauteil 1 eine Schaltgabel und als teilweise gezeigtes Bauteil 2 ein Gabelmitnehmer vorgesehen ist. Beide Bauteile 1 und 2 berühren sich in einem überlappenden Fügebereich, gebildet durch den Quersteg 1.1 der Schaltgabel 1 und dem freien Ende 2.1 des Gabelmitnehmers 2. Die dadurch gebildeten Fügestellen, gekennzeichnet durch die Pfeile 3 und 4, sind bei diesem ersten Ausführungsbeispiel durch Schweissnähte 5 und (6) gleichzeitig zusammengeschweisst worden.

Die in Fig. 2 vereinfacht dargestellte mögliche Schweissvorrichtung für ein Zusammenschweissen der Schaltgabel 1 mit dem Gabelmitnehmer 2 besitzt eine Innenkontur der Schaltgabel 1 entsprechend ausgebildeten Aufnahmeblock 7, der wiederum auf einer Grundplatte 8 befestigt ist.

Der Gabelmitnehmer 2 liegt bei dieser Schweissvorrichtung mit seinem t-förmigen Endstück auf einem Auflageblock 9 auf und kann mit diesem auch durch Schrauben befestigt werden. Schneller ist jedoch ein Fixieren der beiden zu verschweissenden Bauteile 1 und 2 zu erreichen, indem der Druck einer Anpresskraft 10 vorgesehen wird, welche durch einen dicken Pfeil in Fig. 2 angedeutet ist.

Bei dem in Fig. 2 gezeigten zweiten Ausführungsbeilspiel einer Schweissverbindung sind statt beidseitig an den Fügestellen 3 und 4 zeitgleich gemäss Fig. 1 angebrachten Schweissnähten 5 und (6) lediglich mehrere Schweisspunkte 11.1 -11.3 vorgesehen, von denen der vorderste Schweisspunkt 11.1 und der hinterste Schweisspunkt 11.3 jeweils etwa um 2 mm vom Anfang und Ende - bezeichnet mit 12 und 13 - des Fügebereiches 1.1/2.1 der Schweissverbindung platziert sind.

Die Funktionsweise der vorliegenden Erfindung ist folgende:
Zum Zusammenschweissen der beiden Bauteile 1 und 2, d.h. der Schaltgabel 1 mit dem Gabelmitnehmer 2, wird die Schaltgabel 1 mit ihrer Innenkontur auf den entsprechend geformten Aufnahmeblock 7 gesteckt und sodann der Gabelmitnehmer 2 mit seinem freien Ende 2.1 deckungsgleich auf den Quersteg 1.1 der Schaltgabel 1 gelegt, wobei sodann das freie Ende 2.1 durch die Anpresskraft 10 (Fig. 2) auf dem Quersteg 1.1 während des Schweissvorgangs gedrückt und somit festgehalten wird.

Danach werden mit Hilfe von zwei sich synchron bewegenden, nicht dargestellten Roboterarmen mit Laserschweissköpfen zeitgleich an beiden Fügestellen 3 und 4 die Schweissnähte 5 und (6) erzeugt, wodurch ein möglicher Verzug der beiden Bauteile 1 und 2 vorteilhaft vermieden bzw. minimiert wird.

Bei dem ersten Ausführungsbeispiel gemäss Fig. 1 wurde mit einer Laserleistung von 1,9 kW geschweisst, wobei die Geometrie der Schweissnähte 5 und (6) bei einem Vorschub von etwa 1000 mm/min eine Schweissnahttiefe von etwa im Mittel von 3,2 mm und eine Schweissnahtbreite von etwa im Mittel von 1,2 mm erhalten wurde. Bei einer Erhöhung des Vorschubs auf etwa 1500 mm/min bei einem ähnlichen Schweissvorgang betrug die mittlere Schweissnahttiefe etwa 2,7 mm und die mittlere Schweissnahtbreite etwa 0,9 mm.

Alternativ ist es auch nach Fig. 2 möglich, statt der Schweissnähte 5 und (6) beidseitig z. B. drei Schweisspunkte 11.1 - 11.3 bzw. 11.1'-11.3' gleichzeitig durch ein Laserschweissen anzubringen, wobei diese dann bevorzugt mindesten 2 mm an den Fügestellen 3 und 4 eingerückt platziert werden sollten. Auch hier hat sich vorteilhaft eine verzugsarme Scheissverbindung ergeben, welche darüber hinaus in berechtigten Fällen auch noch spannungsarm geglüht werden kann, wobei dann die jeweilige Zugfestigkeit der Schweissverbindung geringfügig abnimmt.

Insgesamt ist somit ein Verfahren zum Verbinden von insbesondere metallischen Bauteilen entwickelt worden, mit dem vorteilhaft ein Bauteilverzug beim thermischen Fügen im wesentlichen vermieden oder zumindest minimiert werden kann, was für derartige und ähnliche Schweissverbindungen einen nicht unwesentlichen Fortschritt bedeutet.

### Bezugszeichenliste

| | | | | | |
|---|---|---|---|---|---|
| 1 | Schaltgabel | 34 | | 67 | |
| 2 | Gabelmitnehmer | 35 | | 68 | |
| 3 | Fügestelle | 36 | | 69 | |
| 4 | Fügestelle | 37 | | 70 | |
| 5 | Schweissnaht | 38 | | 71 | |
| 6 | Schweissnaht | 39 | | 72 | |
| 7 | Aufnahmeblock | 40 | | 73 | |
| 8 | Grundplatte | 41 | | 74 | |
| 9 | Auflageblock | 42 | | 75 | |
| 10 | Anpresskraft | 43 | | 76 | |
| 11 | Schweisspunkte | 44 | | 77 | |
| 12 | Anfang | 45 | | 78 | |
| 13 | Ende | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Herstellung einer verzugsarmen Schweissverbindung zwischen insbesondere metallischen Bauteilen (1, 2)
**dadurch gekennzeichnet, dass** die Bauteile (1,2) eine Schaltgabel (1) und ein Gabelmitnehmer (2) und
dass die Schaltgabel (1) auf einen Aufnahmeblock (7) gelegt wird und der Gabelmitnehmer (2) auf einen Aufnahmeblock (9) gelegt wird und die Bauteile (1, 2) zusammengebracht bzw. zusammengefügt und an mindestens zwei örtlich verschiedenen Fügestellen (3, 4) zeitgleich miteinander verschweisst werden, wobei durch die Fügestellen (3, 4) die Bauteile (1, 2) vorfixiert werden, wobei die zu verschweissenden Bauteile (1, 2) nach ihrem Zusammenfügen zumindest während des Schweissvorgangs zumindest in ihrem Fügebereich (1.1, 2.1) durch eine Anpresskraft (10) in ihren Lagen gehalten werden.

2. Verfahren nach Anspruch 1, **dadurch gekennzeichnet, dass** das zeitgleiche Verschweissen der Bauteile (1, 2) an sich gegenüberliegenden Fügestellen (3, 4) durchgeführt wird.

3. Verfahren nach Anspruch 1 oder 2, **dadurch gekennzeichnet, dass** die zu verschweissenden Bauteile (1, 2) nach ihrem Zusammenfügen zumindest während des Schweissvorgangs jedes für sich in seiner Lage gehalten wird.

4. Verfahren nach einem der vorhergehenden Ansprüche 1-3, **dadurch gekennzeichnet, dass** die zeitgleichen Schweissvorgänge mittels eines Laserschweissens oder anderen Strahlschweissverfahrens, wie das Elektronenschweissverfahren, ausgeführt werden.

5. Verfahren nach einem der vorhergehenden Ansprüche 1 - 3, **dadurch gekennzeichnet, dass** die zeitgleichen Schweissvorgänge mittels eines Metall-Inertgas (MIG) -Schweissens durchgeführt werden.

6. Verfahren nach einem der vorhergehenden Ansprüche 1-3, **dadurch gekennzeichnet, dass** die zeitgleichen Schweissvorgänge mittels eines Laser- und/oder MSG-Tandem-Schweissens durchgeführt werden.

7. Verfahren nach einem der vorhergehenden Ansprüche, **dadurch gekennzeichnet, dass** die zeitgleichen Schweissvorgänge mit Hilfe von mindestens zwei sich synchron bewegenden und jeweils mit einem Schweisskopf bestückten Roboterarmen ausgeführt werden.

8. Verfahren nach einem der vorhergehenden Ansprüche, **dadurch gekennzeichnet, dass** dieses zum Verbinden von Schaltelementen bei Schaltgetrieben verwendet wird.

9. Verfahren nach Anspruch 8, **dadurch gekennzeichnet, dass** dieses insbesondere zum Verbinden einer Schaltgabel (1) mit einem Gabelmitnehmer (2) angewendet wird.

10. Verfahren insbesondere nach Anspruch 9, **dadurch gekennzeichnet, dass** die zeitgleich an beiden Fügestellen (3, 4) erzeugte Schweissverbindung jeweils durch eine Schweissnaht (5, 6) oder durch Schweisspunkte (11) erfolgt.

11. Verfahren nach Anspruch 10, **dadurch gekennzeichnet, dass** nach dem Schweissvorgang die erzeugte Schweissverbindung zu einer weiteren Reduzierung von möglichen Spannungen in der Schweissverbindung spannungsarm geglüht wird.

## Claims

1. Method for producing a low-distortion welded connection between especially metal components (1, 2),
**characterised in that** the components (1, 2) a shift fork (1) and a fork driver (2) and
**in that** the shift fork (1) is placed on a receiving block (7) and the fork driver (2) is placed on a receiving block (9) and the components (1, 2) are brought together or joined together and are welded to each other simultaneously at at least two spatially different joining places (3, 4), the components (1, 2) being prefixed by the joining places (3, 4), the components (1, 2) which are to be welded, after joining them together, being held in their positions by a pressing force (10) at least during the welding process and at least in their joining area (1.1, 2.1).

2. Method according to Claim 1, **characterised in that** the simultaneous welding of the components (1, 2) is carried out at joining places (3, 4) lying opposite each other.

3. Method according to Claim 1 or 2, **characterised in that** the components (1, 2) which are to be welded, after joining them together, are each separately held in position at least during the welding process.

4. Method according to one of the preceding Claims 1-3, **characterised in that** the simultaneous welding processes are carried out by a laser welding or other beam welding procedure, such as the electron welding procedure.

5. Method according to one of the preceding Claims 1-3, **characterised in that** the simultaneous welding processes are carried out by metal inert gas (MIG) welding.

6. Method according to one of the preceding Claims 1-3, **characterised in that** the simultaneous welding processes are carried out by laser and/or GMAW tandem welding.

7. Method according to one of the preceding claims, **characterised in that** the simultaneous welding processes are carried out with the aid of at least two robot arms in synchronised motion and each equipped with a welding head.

8. Method according to one of the preceding claims, **characterised in that** said method is used to connect shift elements in manual gearboxes.

9. Method according to Claim 8, **characterised in that** said method is used to connect a shift fork (1) to a fork driver (2).

10. Method in particular according to Claim 9, **characterised in that** the welded connection produced simultaneously at both joining places (3, 4) is made in each case by a welding seam (5, 6) or by welding spots (11).

11. Method according to Claim 10, **characterised in that**, after the welding process, the welded connection produced undergoes stress relief annealing for further reduction of possible stresses in the welded connection.

## Revendications

1. Procédé pour réaliser une liaison soudée à faible déformation entre des composants en particulier métalliques (1, 2),
**caractérisé par le fait que** les composants (1, 2) sont une fourchette d'embrayage (1) et un entraîneur de fourchette (2), et
que la fourchette d'embrayage (1) est posée sur un bloc de réception (7) et que l'entraîneur de fourchette (2) est posé sur un bloc de réception (9) et que les composants (1, 2) sont réunis ou assemblés et sont, au moins en deux endroits d'assemblage localement différents (3, 4), assemblés simultanément par soudage l'un à l'autre, les composants (1, 2) étant préfixés par les endroits d'assemblage (3, 4), les composants à assembler par soudage (1, 2) étant, après leur assemblage au moins pendant l'opération de soudage, au moins dans leur zone d'assemblage (1.1, 2.1), maintenus dans leurs positions par une force de pression (10).

2. Procédé selon la revendication 1, **caractérisé par le fait que** l'assemblage simultané par soudage des composants (1, 2) est réalisé à des endroits d'assemblage opposés (3, 4).

3. Procédé selon la revendication 1 ou 2, **caractérisé par le fait que** les composants à assembler par soudage (1, 2) sont, après leurs assemblage, maintenus chacun pour soi dans sa position, au moins pendant l'opération de soudage.

4. Procédé selon l'une des revendications précédentes 1 à 3, **caractérisé par le fait que** les opérations de soudage simultanées sont réalisées par soudage laser ou d'autres procédés de soudage par faisceau, tels que le procédé de soudage par faisceau d'électrons.

5. Procédé selon l'une des revendications précédentes 1 à 3, **caractérisé par le fait que** les opérations de soudage simultanées sont réalisées par soudage métal-gaz inerte (MGI).

6. Procédé selon l'une des revendications précédentes 1 à 3, **caractérisé par le fait que** les opérations de soudage simultanées sont réalisées par soudage tandem laser et/ou MSG.

7. Procédé selon l'une des revendications précédentes, **caractérisé par le fait que** les opérations de soudage simultanées sont réalisées à l'aide d'au moins deux bras de robot se mouvant de manière synchrone et équipés, chacun, d'une tête de soudage.

8. Procédé selon l'une des revendications précédentes, **caractérisé par le fait qu'**il est utilisé pour l'assemblage d'éléments d'entraînement dans des boîtes de vitesses.

9. Procédé selon la revendication 8, **caractérisé par le fait qu'**il est appliqué en particulier pour l'assemblage d'une fourchette d'entraînement (1) avec un entraîneur de fourchette (2).

10. Procédé en particulier selon la revendication 9, **caractérisé par le fait que** la liaison soudée produite simultanément aux deux endroits d'assemblage (3, 4) a lieu chaque fois par un cordon de soudure (5, 6) ou par des points de soudure (11).

11. Procédé selon la revendication 10, **caractérisé par le fait que**, après l'opération de soudage, la liaison soudée produite est recuite à faible tension, en vue d'une nouvelle réduction de possibles tensions dans la liaison soudée.
